# EUROPEAN PATENT SPECIFICATION

(11) **EP 3 647 281 B1**
(45) Date of publication and mention of the grant of the patent: **28.02.2024**
(21) Application number: 19197981.4
(22) Date of filing: 18.09.2019
(51) Int. Cl.: C03B 23/025

(54) **METHOD OF FORMING GLASS PLATE**
VERFAHREN ZUR HERSTELLUNG EINER GLASPLATTE
PROCÉDÉ DE FORMATION DE PLAQUE DE VERRE

(30) Priority: 01.11.2018 JP 2018206364
(43) Date of publication of application: 06.05.2020
(73) Proprietor: Nippon Electric Glass Co., Ltd., Otsu-shi, Shiga 520-8639 (JP)
(72) Inventor: KANDA, Toshioki, Shiga, 520-8639 (JP); HANAMOTO, Keishi, Shiga, 820-8639 (JP); MORIGAMI, Hiroaki, Shiga, 520-8639 (JP)
(74) Representative: Tetzner, Michael

(56) References cited:
- US-A- 2 317 904
- US-A- 2 663 974

## Description

The present invention relates to a method of forming a glass plate.

### Description of the Related Art

For heating devices such as stationary stoves and fireplaces, crystallized glass is used as part of the window glass and the heating device so that it is possible to see the inside. The crystallized glass has various shapes such as a flat plate shape, a bent shape, and an arc shape.

An arc-shaped crystallized glass is produced by bending a plate-like glass plate to become an arc shape with a fire-resistant forming die (so-called stilt) having a valley shape (a shape having a curved recess).

However, in recent years, demand for arc-shaped crystallized glass with a large arc angle is increasing, therefore, a large glass plate will be used in order to produce crystallized glass with a large arc angle. Therefore, it becomes more difficult to bend such a glass plate while holding it with the valley-shaped stilt.

For this reason, when manufacturing crystallized glass with a large arc angle, a flat glass plate is curved into an arc shape using a stilt with a mountain-like shape (a shape with a curved convex part).

JP 2016-169116 A discloses a method of forming a glass plate. In this method, a mountain-like forming die is used. A flat portion for stably supporting the glass plate is formed at the upper end of the forming die.

However, the forming method disclosed in JP 2016-169116 A is difficult to sufficiently suppress the variation in the shape of the glass plate after forming, and it is difficult to sufficiently suppress the incidence of shape defects.

US 2 663 974 A discloses a method of forming a glass plate, wherein the glass plate is placed on a convex surface of a forming die, thereafter the glass plate is bent into a shape along the curved surface by heating the glass plate, wherein a flexible strip extending along the contour of the convex surface, the flexible strip being positioned for engagement with the top surface of the glass plate throughout the length of the convex surface, and means acting on the flexible strips tending to bend the flexible strips to the contour of the convex surface. US 2 317 904 A discloses a method of forming a glass plate on a curved die with a through hole and lower ends by applying forces on the glass plate by means of rollers.

### SUMMARY OF THE INVENTION

An object of the present invention is to provide a method of forming a glass plate in which the variation in the shape of the glass plate can be suppressed, and the yield can be improved.

The present invention provides a method of forming a glass plate according to claim 1. In a method of forming a glass plate of the present invention, the glass plate is placed on a convex curved surface of a forming die, thereafter the glass plate is bent into a shape along the curved surface by heating the glass plate. The method comprises a placing step of placing the glass plate on the curved surface of the forming die. The method further comprises a processing step of bending the glass plate by softening the glass plate by heating the glass plate while applying a force to at least any part of a peripheral edge of the glass plate.

It is preferable that the forming die has a first end face and a second end face connected to the curved surface, the first end face and the second end face being opposite to each other, and a through hole penetrating from the first end face to the second end face.

It is preferable that when a portion, on which the glass plate is placed, of the forming die is taken as an upper side of the forming die, the curved surface of the forming die has a first lower end and a second lower end, and the forming die has a first side face and a second side face connected to the first lower end and the second lower end of the curved surface, respectively, the first side face and the second side face being opposite to each other. It is more preferable that the forming die has a bottom face connected to the first side face and the second side face, and the first side face and the second side face extend perpendicularly to the bottom face.

In the processing step, the force is applied to at least any part of the peripheral edge of the glass plate with a weight placed on the glass plate. The glass plate has a first side and a second side being opposite to each other, the first side and the second side contacting with an upper end of the forming die in the placing step respectively, and, in the processing step, the force is applied to at least any part of the peripheral edge of the glass plate with a plate-like weight placed on each of the first side and the second side. Alternatively, in the processing step, the force is applied to the peripheral edge of the glass plate with a frame-shaped weight placed on an entire portion of the peripheral edge of the glass plate. In these cases, the weight is made of glass having a same composition as a composition of glass constituting the glass plate.

It is preferable that the glass plate has a third side and a fourth side being opposite to each other, the third side and the fourth side not contacting with the forming die respectively in the placing step, and before the placing step, the method includes a film forming step of forming a coating film on the glass plate so that the coating film does not reach the third side or the fourth side.

It is preferable that a plurality of grooves are arranged from the first end face toward the second end face in the through hole of the forming die.

According to the present invention, it is possible to provide a method of forming a glass plate in which the variation in the shape of the glass plate can be suppressed, and the yield can be improved.

### BRIEF DESCRIPTION OF THE DRAWINGS

Fig. 1 is a schematic front cross-sectional view of a forming die used in a method of forming a glass plate according to an embodiment of the present invention;
Fig. 2 is a schematic perspective view of the forming die used in a method of forming a glass plate according to an embodiment of the present invention;
Fig. 3 is a schematic plan view of a glass plate used in a method of forming a glass plate according to an embodiment of the present invention;
Fig. 4 is a schematic perspective view for explaining a method of forming a glass plate according to an embodiment of the present invention;
Fig. 5 is a schematic front cross-sectional view for explaining a method of forming a glass plate according to an embodiment of the present invention;
Fig. 6 is a schematic perspective view for explaining a shape defect of a glass plate after forming;
Fig. 7 is a diagram showing a shape defective rate of a glass plate formed by the forming method of the embodiment shown in Fig. 4 and a comparative example;
Fig. 8 is a schematic front view of a glass plate for explaining the central angle of the glass plate after forming;
Fig. 9 is a schematic front cross-sectional view of a forming die used in a method of forming a glass plate according to a first modification of the embodiment shown in Fig. 4; and
Fig. 10 is a schematic perspective view for explaining a method of forming a glass plate according to a second modification of the embodiment shown in Fig. 4.

### DETAILED DESCRIPTION OF THE PREFERRED EMBODIMENTS

Hereinafter, preferred embodiments will be described. However, the following embodiments are merely illustrative, and the present invention is not limited to the following embodiments. In the drawings, members having substantially the same functions may be referred to by the same reference numerals.

### (Forming die)

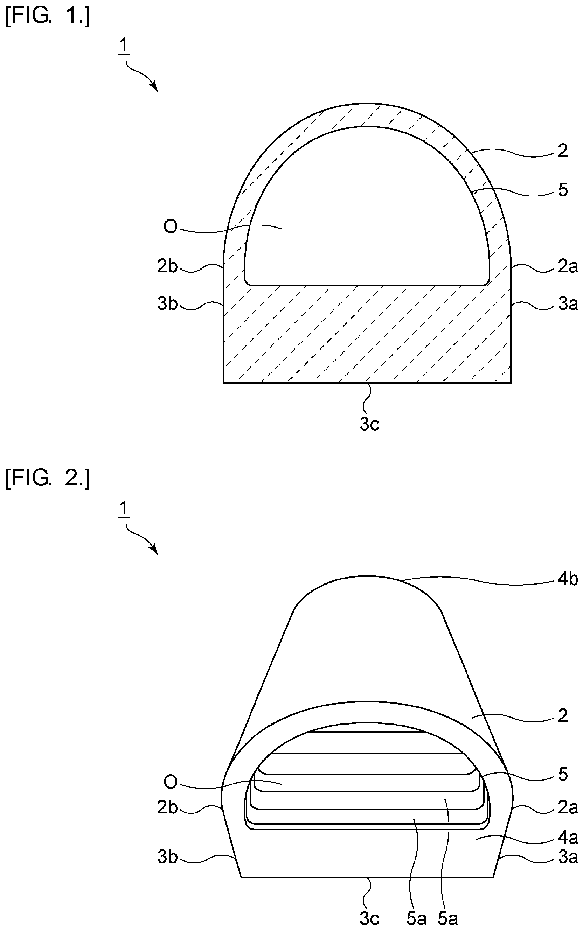

Fig. 1 is a schematic front cross-sectional view of a forming die used in a method of forming a glass plate according to an embodiment of the present invention. Fig. 2 is a schematic perspective view of a forming die used in a method of forming a glass plate according to an embodiment of the present invention.

A forming die 1 shown in Figs. 1 and 2 has a convex curved surface 2. In the present embodiment, the curved surface 2 has a curved shape in a substantially semicircular column and has a substantially semi-circular cross-sectional shape. However, the shape of the curved surface 2 is not limited to the above.

When forming a glass plate, the glass plate is placed on the curved surface 2. In the present specification, the side on which the glass plate is placed (the upper part of the page in Fig. 1) is the upper side of the forming die 1. The direction in which the substantially semicircular column of the curved surface 2 extends (the direction extending from the depth side to the near side of the page in Fig. 1) is referred to as the axial direction. The curved surface 2 has a first lower end 2a and a second lower end 2b. The first lower end 2a and the second lower end 2b extend in the axial direction.

A planar first side face 3a is connected to the first lower end 2a, and a planar second side face 3b is connected to the second lower end 2b. The first side face 3a and the second side face 3b are opposite to each other and extend parallel to each other. A bottom face 3c is connected to the first side face 3a and the second side face 3b. The first side face 3a and the second side face 3b extend perpendicularly to the bottom face 3c. However, the first side face 3a and the second side face 3b may not extend parallel to each other, and may extend obliquely with respect to the direction perpendicular to the bottom face 3c. Alternatively, the forming die 1 may not have the first side face 3a and the second side face 3b.

As shown in Fig. 2, the forming die 1 has a first end face 4a and a second end face 4b which are connected to the curved surface 2 and opposite to each other. More specifically, the first end face 4a is connected to one end of the curved surface 2 in the axial direction, and the second end face 4b is connected to the other end. The first end face 4a and the second end face 4b are also connected to the first side face 3a, the second side face 3b and the bottom face 3c.

The forming die 1 has a through hole O penetrating from the first end face 4a to the second end face 4b. Thereby, the forming die 1 has an inner face 5 connected to the first end face 4a and the second end face 4b. The inner face 5 includes a curved surface corresponding to the curved surface 2. The inner face 5 has a plurality of grooves 5a arranged along the axial direction. Although the direction in which the plurality of grooves 5a extend is not particularly limited, in the present embodiment, the plurality of grooves 5a extend in the direction orthogonal to the axial direction. The effect by virtue of such a structure is mentioned later.

### (Method of forming glass plate)

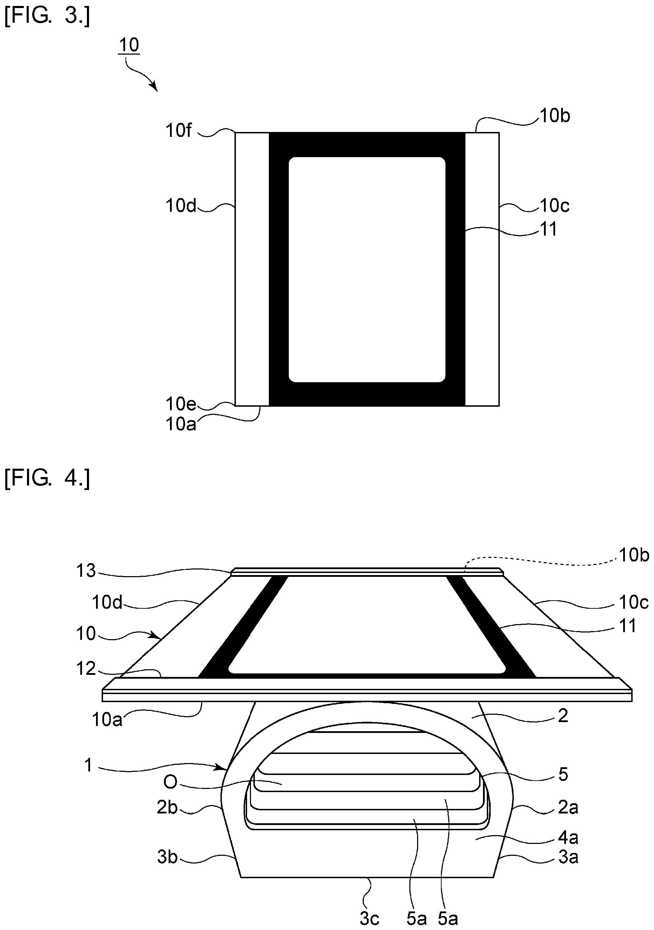

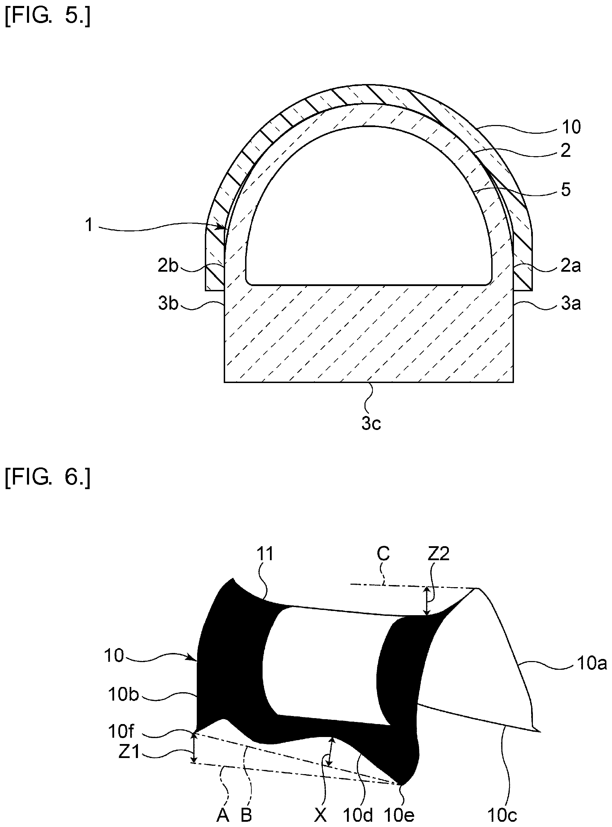

Fig. 3 is a schematic plan view of a glass plate used in a method of forming a glass plate according to an embodiment of the present invention. Fig. 4 is a schematic perspective view for explaining a method of forming a glass plate according to an embodiment of the present invention. Fig. 5 is a schematic front cross-sectional view for explaining a method of forming a glass plate according to an embodiment of the present invention.

First, a glass plate 10 shown in Fig. 3 is prepared. The glass plate 10 has a substantially rectangular plate shape. In the present specification, the substantially rectangular plate shape includes a rectangular plate shape. The glass plate 10 has a first side 10a and a second side 10b being opposite to each other, and a third side 10c and a fourth side 10d being opposite to each other.

Next, a frame-shaped coating film 11 is formed on one main surface of the glass plate 10. More specifically, the coating film 11 is formed so that the coating film does not reach the third side 10c or the fourth side 10d. The coating film 11 is not particularly limited, but can be formed of, for example, ink or paste containing a carbon black pigment or an oxide black pigment. The shape of the coating film 11 is not limited to the frame shape.

The portion of the glass plate 10 on which the coating film 11 is formed is a light shielding portion of the glass plate 10. On the other hand, the portion of the glass plate 10 where the coating film 11 is not formed is a light transmitting portion of the glass plate 10. As described above, in the forming method in the present embodiment, the glass plate 10 having the light transmitting portion and the light shielding portion is formed. However, the forming method according to the present invention can also be used for forming a glass plate having no coating film 11 without a light shielding portion.

Next, as shown in Fig. 4, a placing step of placing the glass plate 10 on the curved surface 2 of the forming die 1 is performed. In the placing step, the glass plate 10 is placed on the curved surface 2 so that the first side 10a and the second side 10b contact with the upper end of the forming die 1, and the third side 10c and the fourth side 10d do not contact with the forming die 1. The glass plate 10 is placed on the curved surface 2 so that the center line (the middle line between the third side 10c and the fourth side 10d) of the glass plate 10 contacts with the upper end of the curved surface 2.

Next, as shown in Figs. 4 and 5, a processing step is performed. Specifically, as shown in Fig. 4, a plate-like weight 12 is placed on the first side 10a of the glass plate 10, and a plate-like weight 13 is placed on the second side 10b. Thereby, a force is applied in the vertical direction to the portion of the first side 10a and the portion of the second side 10b of the peripheral edge of the glass plate 10. The position at which the force is applied to the peripheral edge of the glass plate 10 is not limited to the above, and the force may be applied to at least any part of the peripheral edge of the glass plate 10.

Next, the glass plate 10 is heated while a force is applied in the vertical direction to at least any part of the peripheral edge of the glass plate 10 as described above. The heating condition is not particularly limited, but in the present embodiment, the glass plate 10 is heated to 700°C to 900°C for 180 minutes. Thereby, the glass plate 10 is softened, and as shown in Fig. 5, the glass plate 10 is bent into a shape along the curved surface 2. In addition, the method of applying a force to at least any part of the peripheral edge of the glass plate 10 is not limited to the above, and the direction in which a force is applied is not restricted to the vertical direction.

Next, the removal step of cutting and removing the vicinity of the third side 10c and the vicinity of the fourth side 10d of the glass plate 10 is performed. However, the removal step is not necessarily performed. In the present specification, the side corresponding to the third side 10c and the side corresponding to the fourth side 10d after the removal step are also referred to as the third side 10c and the fourth side 10d.

A feature of the present embodiment is that the glass plate 10 is heated and softened while a force is applied to at least any part of the peripheral edge of the glass plate 10. Thereby, the variation in the shape of the glass plate 10 can be suppressed, and the yield can be improved. The details are described below.

Fig. 6 is a schematic perspective view for explaining the shape defect of the glass plate after forming. The glass plate shown in Fig. 6 is a glass plate after the removal step.

The vertical direction in Fig. 6 is referred to as the height direction. It is the best that the third side 10c and the fourth side 10d have a uniform position in the height direction and extend linearly after the formation of the glass plate 10. However, after the formation of the glass plate 10, distortion is actually generated on each side of the glass plate 10, resulting in variation in shape. Therefore, distortion has actually occurred to the third side 10c and the fourth side 10d. The glass plate 10 has a first corner 10e to which the first side 10a and the fourth side 10d are connected and a second corner 10f to which the second side 10b and the fourth side 10d are connected. An imaginary line A in Fig. 6 indicates a position where the position in the height direction is the same as that of the first corner 10e. The absolute value of the difference between the position of the first corner 10e in the height direction and the position of the second corner 10f in the height direction is referred to as a first height variation Z1.

On the other hand, an imaginary line B in Fig. 6 is a straight line connecting the first corner 10e and the second corner 10f. The variation in the distance between the imaginary line B and each portion of the fourth side 10d is referred to as a straight-line variation X.

In the placing step and the processing step, the portion of the center line of the glass plate 10 in plan view is in contact with the upper end of the forming die 1. Therefore, the portion of the center line of the glass plate 10 after forming is ideally uniform in the height direction. However, actually, the vicinity of the first side 10a and the vicinity of the second side 10b include a portion in which the position in the height direction is not uniform. An imaginary line C in Fig. 6 indicates the same position in the height direction as the portion of the first side 10a located at the center line of the glass plate 10. The difference between the position of the first side 10a located at the center line in the height direction and the position near the middle of the glass plate 10 in the height direction is referred to as a second height variation Z2. The second height variation Z2 is a positive value when the position of the first side 10a located at the center line in the height direction is higher than the position near the middle in the height direction.

Although the first side 10a and the second side 10b after forming the glass plate 10 have ideally the same arc length, actually, the first side 10a and the second side 10b have distortions. The difference between the arc length of the first side 10a and the arc length of the second side 10b is referred to as an arc variation R. The arc variation R is a positive value when the arc length of the first side 10a is longer than the arc length of the second side 10b.

The shape defective rate was compared between the glass plate formed by the forming method of the present embodiment and a glass plate formed by a forming method of a comparative example. The forming method of the comparative example is different from that of the present embodiment in that no force is applied to any part of the peripheral edge of the glass plate in the processing step.

In respective glass plates formed by the forming method of the present embodiment and the forming method of the comparative example, the first height variation, the second height variation, the straight-line variation and the arc variation are calculated. The references for the shape defect in terms of the first height variation, the second height variation, the straight-line variation, and the arc variation were set to 2.5 mm or more, 0.5 mm or more and -0.5 mm or less, 0.5 mm or more and -0.5 mm or less, and 0.5 mm or more and -0.5 mm or less, respectively. Based on the above criteria, the shape defective rate of 1000 glass plates formed by the forming method of the present embodiment and the shape defective rate of 1000 glass plates formed by the forming method of the comparative example were calculated.

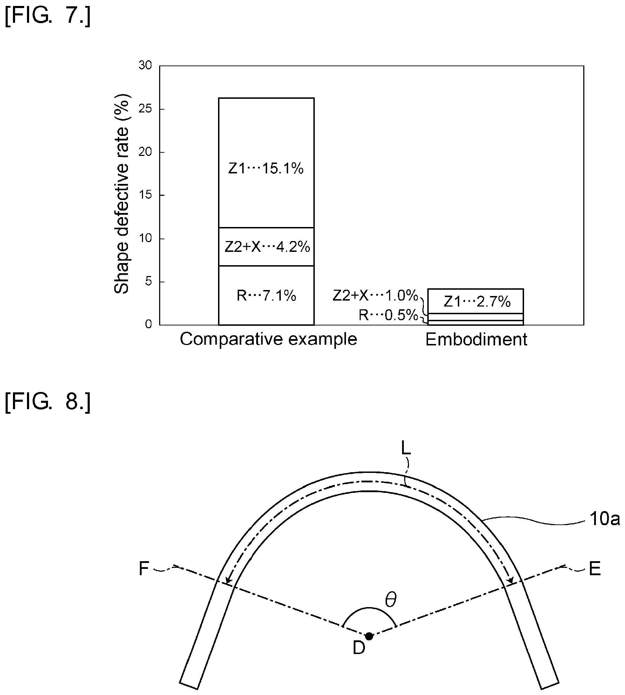

Fig. 7 is a diagram showing a shape defective rate of glass plates formed by the forming method of the embodiment shown in Fig. 4 and the comparative example. Z1 in Fig. 7 indicates the shape defective rate in terms of the first height variation. Z2 + X indicates the sum of the shape defective rate in terms of the second height variation and the straight-line variation. R indicates the shape defective rate in terms of the arc variation.

As shown in Fig. 7, it can be seen that the total sum of the shape defective rates for the glass plate formed by the forming method of this embodiment is smaller than that for the glass plate formed by the forming method of the comparative example. It can be seen that the shape defective rate in terms of the first height variation Z1, the sum of the shape defective rates in terms of the second height variation Z2 and the straight-line variation X, and the shape defective rate in terms of the arc variation R according to the forming method of the present embodiment are lower than those according to the forming method of the comparative example. Thus, the yield of the glass plate can be improved by the forming method of the present embodiment.

In the embodiment shown in Fig. 4 and Fig. 5, in the processing step, the glass plate 10 is softened and bent while a force is applied to at least any part of the peripheral edge of the glass plate 10. Thereby, distortion in the vicinity of each side of the glass plate 10 can be suppressed, and variation in the shape of the glass plate 10 after forming can be suppressed.

As in the present embodiment, the forming die 1 is preferably provided with the through hole O penetrating from the first end face 4a to the second end face 4b. Thereby, in the processing step, the forming die 1 can be heated also from the inner face 5 side. Therefore, the temperature of the glass plate 10 can be easily and more reliably raised in the processing step, and the glass plate 10 can be bent easily and more reliably. The through hole O is not necessarily provided.

The inner face 5 of the forming die 1 preferably includes a curved surface corresponding to the curved surface 2. Thereby, the thickness in the vicinity of the curved surface 2 of the forming die 1 can be reduced. Therefore, in the processing step, the vicinity of the curved surface 2 in contact with the glass plate 10 can be easily heated. Therefore, the propagation of heat from the glass plate 10 to the forming die 1 can be effectively suppressed, and the temperature of the glass plate 10 can be easily and more reliably raised.

More preferably, the inner face 5 of the forming die 1 has the grooves 5a. Still more preferably, the inner face 5 has the plurality of grooves 5a, and in the through hole O, the plurality of grooves 5a are arranged from the first end face 4a toward the second end face 4b. Thereby, the forming die 1 can be efficiently heated in the processing step. Therefore, the propagation of heat from the glass plate 10 to the forming die 1 can be further suppressed, and the temperature of the glass plate 10 can be more easily and reliably raised. The grooves 5a are not necessarily provided.

In the present embodiment, the entire first side 10a of the glass plate 10 is substantially arc-shaped after forming. Part of the first side 10a may be substantially arc-shaped, and the vicinity of both ends of the first side 10a may be substantially linear. As shown in Fig. 8, a straight line connecting a center D of an imaginary circle including a substantially arc-shaped portion of the first side 10a and one end of the substantially arc-shaped portion of the first side 10a is referred to as a first straight line E. A straight line connecting the center D of the circle and the other end of the substantially arc-shaped portion of the first side 10a is referred to as a second straight line F. An angle formed by the first straight line E and the second straight line F is referred to as a central angle θ.

As in the present embodiment shown in Fig. 1, the forming die 1 preferably has the planar first side face 3a and the planar second side face 3b. As a result, the glass plate 10 can also reach the portion of the forming die 1 below the curved surface 2 in the processing step. Therefore, the large-sized glass plate 10 can be more reliably bent into a substantially arc shape having a large central angle θ.

More preferably, the first side face 3a and the second side face 3b extend perpendicularly to the bottom face 3c. In this case, the large-sized glass plate 10 can be bent more reliably into a substantially arc shape having a large central angle θ. As in the present embodiment, the large-sized glass plate 10 can be more reliably formed into a substantially arc shape having a central angle θ of 180°.

As shown in Fig. 8, it is assumed that the arc length of the substantially arc-shaped portion of the first side 10a is L (mm), and the ratio of the arc length L (mm) to the central angle θ (°) is the arc length ratio L/θ. The forming method of the present embodiment is preferable, for example, when forming the glass plate 10 having an arc length ratio L/θ of 1.5 or more, 2.0 or more, particularly 3.14 or more.

Since the thermal expansion coefficient of the coating film 11 and the thermal expansion coefficient of the glass plate 10 are different, there is also a possibility that the variation in the shape of the glass plate 10 after forming increases when bending the glass plate 10 on which the coating film 11 is formed. For that reason, it is preferable to form the coating film 11 so that it does not to reach the third side 10c or the fourth side 10d as in the present embodiment shown in Fig. 4. Thereby, even when the coating film 11 is formed, the variation in the shape of the glass plate 10 after forming can be suppressed.

In the removal step, it is preferable to cut and remove a portion, including the third side 10c, which does not reach a portion where the coating film 11 is formed, and a portion, including the fourth side 10d, which does not reach a portion where the coating film 11 is formed. The variation in a shape can be suppressed more reliably in a portion in which the coating film 11 is not formed. Therefore, the variation in the shape in the third side 10c and the fourth side 10d after the removal step can be more reliably suppressed.

In the present embodiment, the plate-like weight 12 and the plate-like weight 13 are placed on the first side 10a and the second side 10b in the processing step. The weight 12 and the weight 13 are made of glass having the same composition as that of the glass constituting the glass plate 10. Thereby, the thermal expansion coefficient of the glass plate 10 and the thermal expansion coefficient of the weight 12 and the weight 13 can be made the same. Therefore, the variation in the shape of the glass plate 10 can be further suppressed even at the time of cooling after bending.

### (First modification)

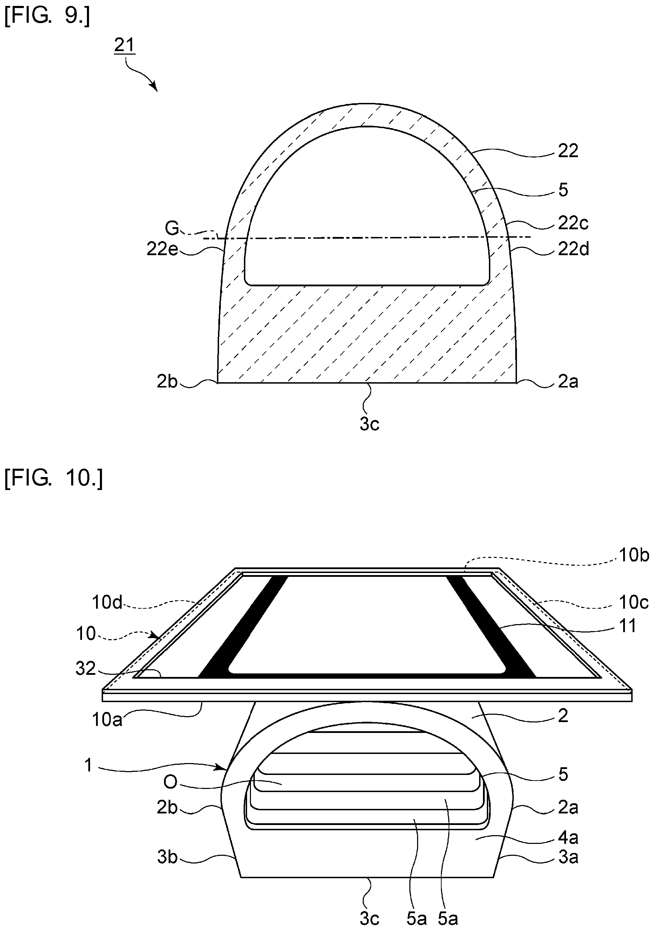

Fig. 9 is a schematic front cross-sectional view of a forming die used in a method of forming a glass plate according to a first modification of the embodiment shown in Fig. 4. In the first modification, a curved surface 22 of a forming die 21 has a first curved portion 22c, a second curved portion 22d, and a third curved portion 22e. The forming die 21 does not have the planar first side face 3a and the planar second side face 3b connected to the curved surface 22. In the curved surface 22, the first curved portion 22c is above the alternate long and short dash line G in Fig. 9, and the second curved portion 22d and the third curved portion 22e are below the alternate long and short dash line G. Specifically, the first curved portion 22c includes the upper end of the curved surface 22. In the present modification, the first curved portion 22c causes the glass plate 10 to be formed into a substantially arc shape. The second curved portion 22d includes the first lower end 2a and is connected to the first curved portion 22c. The second curved portion 22d has a decreased curvature toward the first lower end 2a. The third curved portion 22e includes the second lower end 2b and is connected to the first curved portion 22c. The third curved portion 22e has a decreased curvature toward the second lower end 2b. The curvature of the first curved portion 22c is uniform.

In this modification, in the processing step, a portion below a part of the glass plate 10 to be formed into a substantially arc shape can reach the second curved portion 22d and the third curved portion 22e of the curved surface 22. Therefore, even when the forming die 21 does not have the first side face 3a and the second side face 3b, the large-sized glass plate 10 can be bent more reliably into a substantially arc shape having a large central angle θ.

The first side face 3a and the second side face 3b may be connected to the first lower end 2a of the second curved portion 22d and the second lower end 2b of the third curved portion 22e, respectively.

### (Second modification)

Fig. 10 is a schematic perspective view for explaining a method of forming a glass plate according to a second modification of the embodiment shown in Fig. 4. In the second modification, in the processing step, a frame-shaped weight 32 is placed on the entire peripheral edge of the glass plate 10 to apply a force to the peripheral edge of the glass plate 10. Also in this case, it is possible to suppress the variation in the shape of the glass plate 10 after forming.

It is preferable to place the weight 32 on all sides of the glass plate 10. Thereby, the variation in the shape of the glass plate 10 can be suppressed more reliably.

The weight 32 is made of glass having the same composition as that of the glass constituting the glass plate 10. Thereby, as in the embodiment shown in Fig. 4, the variation in the shape of the glass plate 10 can be further suppressed.

### Reference numerals

- 1: a forming die
- 2: a curved surface
- 2a: a first lower end
- 2b: a second lower end
- 3a: a first side face
- 3b: a second side face
- 3c: a bottom face
- 4a: a first end face
- 4b: a second end face
- 5: an inner face
- 5a: a plurality of grooves
- 10: a glass plate
- 10a: a first side
- 10b: a second side
- 10c: a third side
- 10d: a fourth side
- 10e: a first corner
- 10f: a second corner
- 11: a coating film
- 12: a weight
- 13: a weight
- 21: a forming die
- 22: a curved surface
- 22c: a first curved portion
- 22d: a second curved portion
- 22e: a third curved portion
- 32: a weight

## Claims

1. A method of forming a glass plate (10), wherein the glass plate (10) is placed on a convex curved surface (2, 22) of a forming die (1, 21), thereafter the glass plate (10) is bent into a shape along the curved surface (2, 22) by heating the glass plate (10), the method comprising:
a placing step of placing the glass plate (10) on the curved surface (2, 22) of the forming die (1, 21),
wherein the method further comprises a processing step of bending the glass plate (10) by softening the glass plate (10) by heating the glass plate (10) while applying a force to at least any part of a peripheral edge of the glass plate (10),
wherein the glass plate (10) has a first side (10a) and a second side (10b) being opposite to each other, the first side (10a) and the second side (10b) contacting with an upper end of the forming die (1, 21) in the placing step respectively,
wherein, in the processing step, the force is applied to at least any part of the peripheral edge of the glass plate (10) with a plate-like weight (12, 13) placed on each of the first side (10a) and the second side (10b), or the force is applied to the peripheral edge of the glass plate (10) with a frame-shaped weight (32) placed on an entire portion of the peripheral edge of the glass plate (10), and
wherein the weight (12, 13, 32) is made of glass having a same composition as a composition of glass constituting the glass plate (10).

2. The method of forming a glass plate (10) according to claim 1, wherein
the forming die (1, 21) has
a first end face (4a) and a second end face (4b) connected to the curved surface (2, 22), the first end face (4a) and the second end face (4b) being opposite to each other, and
a through hole (O) penetrating from the first end face (4a) to the second end face (4b).

3. The method of forming a glass plate (10) according to claim 1 or 2,
wherein when a portion, on which the glass plate (10) is placed, of the forming die (1) is taken as an upper side of the forming die (1), the curved surface (2) of the forming die (1) has a first lower end (2a) and a second lower end (2b), and
wherein the forming die (1) has a first side face (3a) and a second side face (3b) connected to the first lower end (2a) and the second lower end (2b) of the curved surface (2), respectively, the first side face (3a) and the second side face (3b) being opposite to each other.

4. The method of forming a glass plate (10) according to claim 3,
wherein the forming die (1) has a bottom face (3c) connected to the first side face (3a) and the second side face (3b), and
wherein the first side face (3a) and the second side face (3b) extend perpendicularly to the bottom face (3c).

5. The method of forming a glass plate (10) according to any one of claims 1 to 4,
wherein the glass plate (10) has a third side (10c) and a fourth side (10d) being opposite to each other, the third side (10c) and the fourth side (10d) not contacting with the forming die (1, 21) respectively in the placing step, and
wherein before the placing step, the method includes a film forming step of forming a coating film (11) on the glass plate (10) so that the coating film (11) does not reach the third side (10c) or the fourth side (10d).

6. The method of forming a glass plate (10) according to any one of claims 2 to 5, wherein a plurality of grooves (5a) are arranged from the first end face (4a) toward the second end face (4b) in the through hole (O) of the forming die (1, 21).

## Patentansprüche

1. Verfahren zum Formen einer Glasplatte (10), wobei die Glasplatte (10) auf eine konvex gekrümmte Oberfläche (2, 22) eines Formungswerkzeugs (1, 21) gelegt wird und anschließend die Glasplatte (10) durch Erhitzen der Glasplatte (10) in eine Form entlang der gekrümmten Oberfläche (2, 22) gebogen wird, das Verfahren umfassend:
einen Platzierungsschritt zum Platzieren der Glasplatte (10) auf der gekrümmten Oberfläche (2, 22) des Formwerkzeugs (1, 21),
wobei das Verfahren ferner einen Bearbeitungsschritt des Biegens der Glasplatte (10) durch Erweichen der Glasplatte (10) durch Erhitzen der Glasplatte (10) umfasst, während eine Kraft auf mindestens einen beliebigen Teil einer Umfangskante der Glasplatte ausgeübt wird (10),
wobei die Glasplatte (10) eine erste Seite (10a) und eine zweite Seite (10b) aufweist, die einander gegenüberliegen, wobei die erste Seite (10a) bzw. die zweite Seite (10b) im Platzierungsschritt mit einem oberen Ende des Formwerkzeugs (1, 21) in Kontakt kommen,
wobei im Bearbeitungsschritt die Kraft auf zumindest einen beliebigen Teil des Umfangsrands der Glasplatte (10) mit einem plattenartigen Gewicht (12, 13) ausgeübt wird, das auf der ersten Seite (10a) bzw. zweiten Seite (10b) platziert wird, oder die Kraft auf den Umfangsrand der Glasplatte (10) mit einem rahmenförmigen Gewicht (32) ausgeübt wird, das auf den gesamten Abschnitt des Umfangsrands der Glasplatte (10) platziert wird, und
wobei das Gewicht (12, 13, 32) aus Glas mit derselben Zusammensetzung wie die Glaszusammensetzung der Glasplatte (10) gefertigt ist.

2. Verfahren zum Formen einer Glasplatte (10) nach Anspruch 1, bei dem das Formungswerkzeug (1, 21) aufweist:
eine erste Endfläche (4a) und eine zweite Endfläche (4b), die mit der gekrümmten Oberfläche (2, 22) verbunden sind, wobei die erste Endfläche (4a) und die zweite Endfläche (4b) einander gegenüberliegen, und
ein Durchgangsloch (O), das von der ersten Endfläche (4a) bis zur zweiten Endfläche (4Db) reicht.

3. Verfahren zum Formen einer Glasplatte (10) nach Anspruch 1 oder 2,
wobei, wenn ein Abschnitt des Formwerkzeugs (1), auf dem die Glasplatte (10) platziert ist, als Oberseite des Formwerkzeugs (1) genommen wird, die gekrümmte Oberfläche (2) des Formwerkzeugs (1) ein erstes unteres Ende (2a) und ein zweites unteres Ende (2b) aufweist, und
wobei das Formwerkzeug (1) eine erste Seitenfläche (3a) und eine zweite Seitenfläche (3b) aufweist, die mit dem ersten unteren Ende (2a) bzw. dem zweiten unteren Ende (2b) der gekrümmten Oberfläche (2) verbunden sind, wobei die erste Seitenfläche (3a) und die zweite Seitenfläche (3b) einander gegenüberliegen.

4. Verfahren zum Formen einer Glasplatte (10) nach Anspruch 3,
wobei das Formwerkzeug (1) eine Bodenfläche (3c) aufweist, die mit der ersten Seitenfläche (3a) und der zweiten Seitenfläche (3b) verbunden ist, und
wobei sich die erste Seitenfläche (3a) und die zweite Seitenfläche (3b) senkrecht zur Bodenfläche (3c) erstrecken.

5. Verfahren zum Formen einer Glasplatte (10) nach einem der Ansprüche 1 bis 4,
wobei die Glasplatte (10) eine dritte Seite (10c) und eine vierte Seite (10d) aufweist, die einander gegenüberliegen, wobei die dritte Seite (10c) bzw. die vierte Seite (10d) im Platzierungsschritt nicht mit dem Formungswerkzeug (1, 21) in Kontakt kommen und
wobei das Verfahren vor dem Platzierungsschritt einen Filmbildungsschritt zum Bilden eines Beschichtungsfilms (11) auf der Glasplatte (10) umfasst, so dass der Beschichtungsfilm (11) die dritte Seite (10c) oder die vierte Seite (10d) nicht erreicht.

6. Verfahren zum Formen einer Glasplatte (10) nach einem der Ansprüche 2 bis 5, wobei mehrere Hohlkehlen (ba) von der ersten Endfläche (4a) hin zur zweiten Endfläche (4b) im Durchgangsloch (O) des Formungswerkzeugs (1, 21) angeordnet sind.

## Revendications

1. Procédé de formage d'une plaque de verre (10), dans lequel la plaque de verre (10) est placée sur une surface incurvée convexe (2, 22) d'une matrice de formage (1, 21), ensuite la plaque de verre (10) est courbée selon une forme le long de la surface incurvée (2, 22) en chauffant la plaque de verre (10), le procédé comprenant :
une étape de placement consistant à placer la plaque de verre (10) sur la surface incurvée (2, 22) de la matrice de formage (1, 21),
où le procédé comprend en outre une étape de traitement consistant à courber la plaque de verre (10) en ramollissant la plaque de verre (10) en chauffant ladite plaque de verre (10), tout en appliquant une force sur au moins n'importe quelle partie d'un bord périphérique de la plaque de verre (10),
procédé dans lequel la plaque de verre (10) a un premier côté (10a) et un deuxième côté (10b) opposés l'un à l'autre, le premier côté (10a) et le deuxième côté (10b) venant respectivement au contact d'une extrémité supérieure de la matrice de formage (1, 21) au cours de l'étape de placement,
procédé dans lequel, au cours de l'étape de placement, la force est appliquée sur au moins n'importe quelle partie du bord périphérique de la plaque de verre (10), avec un poids (12, 13) semblable à la plaque, ledit poids étant placé sur chacun du premier côté (10a) et du deuxième côté (10b), ou bien la force est appliquée sur le bord périphérique de la plaque de verre (10), avec un poids (32) en forme de cadre, ledit poids étant placé sur une partie entière du bord périphérique de la plaque de verre (10), et
procédé dans lequel le poids (12, 13, 32) est celui d'un verre ayant une même composition que celle du verre constituant la plaque de verre (10).

2. Procédé de formage d'une plaque de verre (10) selon la revendication 1, dans lequel :
la matrice de formage (1, 21) a :
une première face d'extrémité (4a) et une seconde face d'extrémité (4b) reliées à la surface incurvée (2, 22), la première face d'extrémité (4a) et la seconde face d'extrémité (4b) étant opposées l'une à l'autre, et
un trou traversant (O) pénétrant dans la première face d'extrémité (4a) jusqu'à la seconde face d'extrémité (4b).

3. Procédé de formage d'une plaque de verre (10) selon la revendication 1 ou 2,
dans lequel, lorsqu'une partie de la matrice de formage (1), sur laquelle est placée la plaque de verre (10), est considérée comme un côté supérieur de la matrice de formage (1), la surface incurvée (2) de la matrice de formage (1) a une première extrémité inférieure (2a) et une seconde extrémité inférieure (2b), et
procédé dans lequel la matrice de formage (1) a une première face latérale (3a) et une seconde face latérale (3b) reliées respectivement à la première extrémité inférieure (2a) et à la seconde extrémité inférieure (2b) de la surface incurvée (2), la première face latérale (3a) et la seconde face latérale (3b) étant opposées l'une à l'autre.

4. Procédé de formage d'une plaque de verre (10) selon la revendication 3,
dans lequel la matrice de formage (1) a une face de dessous (3c) reliée à la première face latérale (3a) et à la seconde face latérale (3b), et
dans lequel la première face latérale (3a) et la seconde face latérale (3b) s'étendent perpendiculairement à la face de dessous (3c).

5. Procédé de formage d'une plaque de verre (10) selon l'une quelconque des revendications 1 à 4,
dans lequel la plaque de verre (10) a un troisième côté (10c) et un quatrième côté (10d) opposés l'un à l'autre, le troisième côté (10c) et le quatrième côté (10d) ne venant pas respectivement au contact de la matrice de formage (1, 21) au cours de l'étape de placement, et
procédé dans lequel, avant l'étape de placement, ledit procédé comprend une étape de formation d'un film, ladite étape consistant à former un film de revêtement (11) sur la plaque de verre (10), de sorte que le film de revêtement (11) n'atteint pas le troisième côté (10c) ou le quatrième côté (10d).

6. Procédé de formage d'une plaque de verre (10) selon l'une quelconque des revendications 2 à 5, dans lequel une pluralité de rainures (5a) est agencée dans le trou traversant (O) de la matrice de formage (1, 21), à partir de la première face d'extrémité (4a) vers la seconde face d'extrémité (4b).
